# EUROPÄISCHE PATENTSCHRIFT

(11) **EP 1 659 832 B1**
(45) Veröffentlichungstag und Bekanntmachung des Hinweises auf die Patenterteilung: **27.02.2019**
(21) Anmeldenummer: 05024595.0
(22) Anmeldetag: 10.11.2005
(51) Int. Cl.: H05B 37/02

(54) **Verfahren zur Vergabe von Kurzadressen in Beleuchtungsanlagen**
Method for allocating short addresses in lighting networks
Méthode pour allouer des adresses de format réduit dans des installations d' éclairage

(30) Priorität: 19.11.2004 DE 102004055933
(43) Veröffentlichungstag der Anmeldung: 24.05.2006
(73) Patentinhaber: OSRAM GmbH, 80807 München (DE)
(72) Erfinder: Huber, Andreas, 83301 Traunreut (DE); Schleicher, Gotthard, Dr., 83349 Palling (DE)

(56) Entgegenhaltungen:
- EP-A1- 0 433 527
- EP-A1- 1 292 175
- EP-A2- 1 480 495
- DE-A1- 4 422 215
- US-A1- 2002 014 867
- US-A1- 2002 043 938
- US-A1- 2003 227 765

## Beschreibung

### Technisches Gebiet

Die Erfindung betrifft ein Verfahren zur Vergabe von Kurzadressen in Beleuchtungsanlagen, deren Beleuchtungs-Komponenten über einen DALI-Bus gesteuert werden. DALI ist die Abkürzung für "Digital Addressable Lighting Interface" und bedeutet ein unter IEC 62386 standardisiertes Protokoll für die Kommunikation von Komponenten einer Beleuchtungsanlagen über einen DALI-Bus.

### Stand der Technik

In der Schrift US 2002/0043938A1 (Lys) ist beschrieben, dass einem Gerät anhand einer eindeutigen Identifizierung eine Basisadresse zugewiesen wird.

In der Schrift DE 4422215A1 (Geiginger) ist beschrieben, dass Verbraucher in einem System vor der Installation jeweils eine Ursprungsadresse aufweisen und ihnen nach der Installation jeweils eine Betriebsadresse zugewiesen wird.

Im einfachsten Fall besteht eine Beleuchtungsanlage aus einem Steuergerät und mindestens einer Beleuchtungs-Komponente, die über einen DALI-Bus miteinander verbunden sind.

Das Steuergerät kann Bedienelemente aufweisen oder von einem übergeordneten Steuersystem angesteuert werden. Beispiele für ein übergeordnetes Steuersystem sind sog. Gebäude-Management-Systeme wie EIB und LON. Die Verbindung zu einem übergeordneten Steuersystem verläuft in der Regel über ein sog. Gateway.

Eine Beleuchtungs-Komponente enthält im allgemeinen ein Lichtquelle und ein dafür geeignetes Betriebsgerät, wobei das Betriebsgerät durch den DALI-Bus steuerbar ist. Lichtquelle kann beispielsweise eine Leuchtstofflampe, eine Halogen-Glühlampe oder eine Leuchtdiode sein und beim Betriebsgerät kann es sich beispielsweise um ein elektronisches Betriebsgerät oder ein Schaltnetzteil handeln.

Damit das Steuergerät eine Beleuchtungs-Komponente steuern kann, muss das Steuergerät die Beleuchtungs-Komponente über ihre Lang- oder Kurzadresse ansprechen. Nach dem DALI-Standard ist die Langadresse 24 Bit und die Kurzadresse 6 Bit lang. In einem Initialisierungsprozess, der vom Steuergerät ausgelöst wird, erzeugt jede angeschlossene Beleuchtungs-Komponente eine zufällige Langadresse. Anschließend sucht das Steuergerät alle Langadressen, die in der Beleuchtungsanlage vorhanden sind und speichert diese.

Mit den meisten Steuergeräten können unter anderem Beleuchtungsszenen gespeichert werden und Beleuchtungs-Komponenten zu Gruppen zusammengefasst werden. Dies ist allerdings nur mit Kurzadressen möglich. Deshalb müssen den Beleuchtungs-Komponenten zusätzlich zu den von den Beleuchtungs-Komponenten selbst generierten Langadressen auch Kurzadressen zugewiesen werden. Dies geschieht in der Regel bei der ersten Inbetriebnahme einer Beleuchtungsanlage. Nach dem Stand der Technik werden Kurzadressen mit Hilfe einer Einrichtung zur Kurzadress-Vergabe gemäß folgendem Verfahren zugewiesen:
Bevor eine Kurzadresse vergeben werden kann, muss die o.g. Langadresse generiert werden. Alle in der Beleuchtungsanlage installierten Beleuchtungs-Komponenten werden nacheinander durch ihre Langadresse adressiert und durch einen Steuerbefehl dazu veranlasst, sich bemerkbar zu machen. Im einfachsten Fall wird die Beleuchtungs-Komponente eingeschaltet. Sie kann beispielsweise auch nur kurzzeitig eingeschaltet werden oder mehrfach ein- und ausgeschaltet werden, wodurch ein Blinksignal erzeugt wird. Ein Bediener stellt daraufhin fest, um welche Beleuchtungs-Komponente es sich handelt, d. h. wo sie sich befindet. Daraufhin stellt der Bediener an der Einrichtung zur Kurzadress-Vergabe die gewünschte Kurzadresse ein und führt ggf. eine Gruppenzuordnung durch.

Das Verfahren nach dem Stand der Technik hat folgende Nachteile: Während des ersten Inbetriebnahme ist zur Zuweisung der Kurzadressen ständig die Anwesenheit eines Bedieners erforderlich. Bei größeren Anlagen kann es sich dabei um mehrere Stunden handeln. Zudem ist dieses Verfahren fehleranfällig, da die Kurzadressen manuell eingegeben werden müssen.

### Darstellung der Erfindung

Es ist Aufgabe der vorliegenden Erfindung, ein Verfahren zur ortsabhängigen Vergabe von Kurzadressen in Beleuchtungsanlagen, deren Beleuchtungs-Komponenten über DALI gesteuert werden, anzugeben, das ohne Bediener abläuft.

Diese Aufgabe wird dadurch erfüllt, dass zur Durchführung des Verfahrens eine Lokalisier-Einrichtung bereit gestellt wird, die geeignet ist, die Lokalisierung einer aktivierten Beleuchtungs-Komponente an eine Einrichtung zur Kurzadress-Vergabe zu melden.

Wie im Stand der Technik beschrieben und entsprechend des DALI Standards muss jeder Beleuchtungs-Komponente zunächst eine zufällige Langadresse besitzen. Dies wird durch einen DALI Befehl ausgelöst, der von der Einrichtung zur Kurzadress-Vergabe gesendet wird. Der Befehl kann aber auch von einem beliebigen Steuergerät kommen, das mit der Beleuchtungsanlage gekoppelt ist.

Die Einrichtung zur Kurzadress-Vergabe muss anschließend Information über die Langadressen von allen in der Beleuchtungsanlage mit Kurzadressen zu versehende Beleuchtungs-Komponenten bekommen. Diese Information kann sich die Einrichtung zur Kurzadress-Vergabe selbst besorgen, indem sie über einen Suchalgorithmus die Langadressen von Beleuchtungs-Komponenten ermittelt. Die Information kann aber auch von einem anderen Steuergerät ermittelt und an die Einrichtung zur Kurzadress-Vergabe übertragen werden.

Über die Langadresse wird nun eine Beleuchtungs-Komponente dazu angeregt, ein Signal auszusenden. Dieses Signal kann, wie oben beschrieben, darin bestehen, dass eine Lampe der Beleuchtungs-Komponente leuchtet. Die Lokalisier-Einrichtung reagiert auf das Signal und leitet daraus die Lokalisierung der aktiven Beleuchtungs-Komponente ab. Die Lokalisierung besteht im wesentlichen aus der Information wo sich eine Beleuchtungs-Komponente in einem zu beleuchtenden Raum befindet. Im allgemeinen wird für einen zu beleuchtenden Raum ein Beleuchtungsplan erstellt. In diesem Plan sind die nötigen Beleuchtungs-Komponenten eingezeichnet und mit einer Bezeichnung versehen. Die Lokalisierung ist dann eine Information darüber welcher Beleuchtungs-Komponente im Beleuchtungsplan eine gerade aktive Beleuchtungs-Komponente entspricht. Eine Zuweisungsliste verknüpft die Lokalisierung mit einer Kurzadresse. Ist die Lokalisierung anhand des erfindungsgemäßen Verfahrens bekannt, vergibt die Einrichtung zur Kurzadress-Vergabe mit Hilfe der Zuweisungsliste eine Kurzadresse.

Vorteilhaft wird das erfindungsgemäße Verfahren dahingehend weitergebildet, dass automatisch für eine vorgegebene Anzahl von Beleuchtungs-Komponenten eine Kurzadresse vergeben wird. Der Vorteil besteht dabei darin, dass in großen Beleuchtungsanlagen alle Kurzadressen vergeben werden können, ohne dass ein Bediener anwesend sein muss.

Die Einrichtung zur Kurzadress-Vergabe kann entweder direkt am DALI-Bus oder an einem übergeordneten Steuersystem angeschlossen sein. Ist der Anschluss direkt am DALI-Bus, so ist die Vergabe der Kurzadressen unabhängig vom übergeordneten Steuersystem möglich. Es muss jedoch dafür Sorge getragen werden, dass während der Kurzadress-Vergabe keine Steuerbefehle vom übergeordneten Steuersystem gesendet werden. Ist der Anschluss über ein übergeordnetes Steuersystem, so kann die Vergabe der Kurzadressen von einer zentralen Stelle für ein gesamtes Gebäude erfolgen. Dabei können auch mehrere Beleuchtungsanlagen gleichzeitig in Betrieb genommen werden.

Die für die Vergabe von Kurzadressen nötigen DALI-Befehle kann ein tragbarer Computer erzeugen. Dafür ist auch ein handelüblicher Computer geeignet und es ist keine spezielle Hardware nötig. Allerdings ist zur Anpassung von externen Anschlüssen des Computers an den DALI-Bus ein Interface nötig.

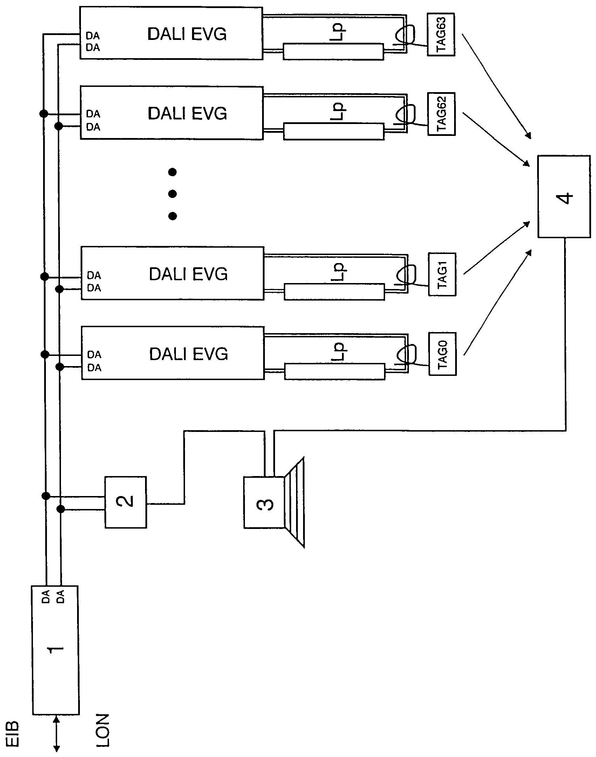

### Kurze Beschreibung der Zeichnung

In der Figur ist schematisch ein System dargestellt, mit dem ein erfindungsgemäßes Verfahren ausgeführt werden kann.

### Bevorzugte Ausführung der Erfindung

In der Figur sind mehrere DALI EVGs dargestellt, die über DALI-Schnittstellen DA mit einem DALI-Bus verbunden sind. Am Ausgang der DALI EVGs ist jeweils eine Lampe Lp angeschlossen. Für jedes DALI EVG kann ein beliebiges Betriebsgerät mit DALI-Schnittstelle DA eingesetzt werden, das für eine Lampe Lp tauglich ist. Eine Kombination bestehend aus DALI EVG und Lampe Lp steht beispielhaft für eine beliebige Beleuchtungs-Komponente. In der Figur sind 4 Beleuchtungs-Komponenten getrennt durch Punkte dargestellt. Damit soll angedeutet werden, dass auch noch weitere Beleuchtungs-Komponenten anschließbar sind. Nach dem derzeit gültigen DALI-Standard sind maximal 64 Beleuchtungs-Komponenten durch Kurzadressen zu unterscheiden.

Das Gateway 1 ist auch über eine DALI-Schnittstelle DA mit dem DALI-Bus verbunden. Ein übergeordnetes Steuersystem wie z. B. EIB oder LON gibt seine Steuerbefehle über das Gateway 1 auf den DALI-Bus. Das übergeordnete Steuersystem, der DALI-Bus, das Gateway 1 und die Beleuchtungs-Komponenten stellen beispielhaft die Beleuchtungsanlage dar. Falls kein übergeordnetes Steuersystem vorhanden ist, kann das Gateway 1 durch ein Steuergerät ersetzt werden, das die Beleuchtungsanlage steuert.

Ein tragbarer Computer 3 ist über ein Interface 2 mit dem DALI-Bus verbunden. Das Interface 2 kann entweder eine eigene Energieversorgung beinhalten, oder seine Energie aus dem DALI-Bus oder dem Computer 3 beziehen. Der tragbare Computer 3 und das Interface 2 bildet die Einrichtung zur Kurzadress-Vergabe. Anstelle des handelsüblichen Computers mit Interface kann auch eine speziell für den Zweck der Kurzadress-Vergabe entwickelte Hardware verwendet werden.

An jedem Lampenstromkreis der Lampen Lp ist ein Tag gekoppelt. Bei den Tags handelt es sich um kleine, an der Beleuchtungs-Komponente befestigte Sender, die eine Kennung senden, wenn sie aktiviert sind. Die Tags sind von 0 bis 63 nummeriert. Damit wird angedeutet, dass 64 Tags an den 64 nach DALI Standard möglichen Beleuchtungs-Komponenten anschließbar sind.

Wie in der Figur angedeutet, besitzt jeder Tag einen Sensordraht, der um einen Lampenanschluss gewickelt oder in der Nähe eines vom Lampenstrom durchflossenen elektrischen Leiters verlegt ist. Damit kann der Tag einen Lampenstrom erfassen und damit erkennen, wenn die Beleuchtungs-Komponente durch die Einrichtung zur Kurzadress-Vergabe aktiviert ist.

Es ist auch möglich, dass die Tags nicht den Lampenstrom erfassen, sondern über einen Lichtsensor erkennen, wenn die Lampe leuchtet. Über spezielle Lichtsignale kann damit der Tag erkennen, wenn die Beleuchtungs-Komponente aktiviert ist.

Die Tags sind im allgemeinen lösbar an der Beleuchtungs-Komponente befestigt. Sie werden zur Vergabe der Kurzadressen beispielsweise mit Haken an die Beleuchtungs-Komponente gehängt. Es ist auch eine Befestigung mit Magneten oder Klammern möglich. Zur Vergabe von Kurzadressen in gleichartigen oder ähnlichen Räumen, brauchen die Tags nach dem Abschluss der Vergabe von Kurzadressen in einem Raum lediglich an eine entsprechende Beleuchtungs-Komponente im nachfolgenden Raum gehängt zu werden. Eine Zuweisungsliste kann dann vom vorhergehenden Raum übernommen werden.

Bei preisgünstigen Tags kann es wirtschaftlich sinnvoll sein, die Tags fest mit der Beleuchtungs-Komponente oder dem Betriebsgerät zu verbinden. Dies ist besonders dann anwendbar, wenn Beleuchtungs-Komponenten schwer zugänglich sind.

Die Tags senden ihre Kennung an einen Empfänger 4. Der Empfänger 4 wertet die Kennung aus und meldet die resultierende Lokalisierung an den tragbaren Computer-3. Mit der Lokalisierung ermittelt der tragbare Computer 3 über die gespeicherte Zuweisungstabelle die zu vergebende Kurzadresse. Nun kann der tragbare Computer 3 einen DALI-Befehl zur Vergabe der ermittelten Kurzadresse über das Interface 2 auf den DALI-Bus ausgeben.

Die Verbindung zwischen den Tags und dem Empfänger 4 ist ohne Verdrahtungsaufwand mit Funksignalen möglich. Es ist jedoch auch eine drahtgebundene Übertragung denkbar. Dann ist es vorteilhaft, lichtempfindliche Tags unter den Beleuchtungs-Komponenten auf den Boden zu legen.

Die Energie, die die Tags zum Senden der Kennung benötigen kann aus verschiedenen Quellen stammen. Eine einfache Lösung ist es, die Tags mit Batterien auszustatten. Um einen Batteriewechsel zu vermeiden, kann vorteilhaft auch eine andere Energiequelle benutzt werden. Beispielsweise kann induktiv Energie vom Betriebsgerät in die Tags eingekoppelt werden.

Es ist auch möglich die Energie über ein Hochfrequenzfeld einzukoppeln. Dazu kann die bekannte RFID (Radiofrequenz-Identifikation) Technologie angewendet werden. Der Empfänger 4 sendet dazu kurze Funkimpulse aus, auf die die betreffenden Tags unter Ausnutzung der Energie der Funkimpulse antworten. Aus der Antwort der Tags kann der Empfänger schließen, welche Beleuchtungs-Komponente aktiviert ist. Es ist auch möglich, eine Antwort der Tags auf die Funkimpulse nur zuzulassen, wenn die Beleuchtungs-Komponente aktiviert ist.

Eine Weiterentwicklung der erfindungsgemäßen Kurzadress-Vergabe besteht darin, dass eine Lokalisier-Einrichtung so ausgestaltet ist, dass sie direkt eine Kurzadresse der ihr zugeordneten Beleuchtungs-Komponente vergeben kann. Die Einrichtung zur Kurzadress-Vergabe ist dann in der Lokalisier-Einrichtung integriert.

## Patentansprüche

1. Verfahren zur Vergabe von Kurzadressen in Beleuchtungsanlagen, deren Beleuchtungs-Komponenten über einen DALI-Bus gesteuert werden **gekennzeichnet durch** folgende Schritte:
• Bereitstellen einer Lokalisier-Einrichtung, die geeignet ist, die Lokalisierung einer aktivierten Beleuchtungs-Komponente an eine Einrichtung zur Kurzadress-Vergabe (2, 3) zu melden, wobei die Lokalisier-Einrichtung aus mehreren Sendern (TAG0, TAG1, ..., TAG63) und einem Empfänger (4) besteht, wobei jeder Beleuchtungs-Komponente ein Sender zugeordnet wird,
• Abspeichern einer Zuweisungsliste in der Einrichtung zur Kurzadress-Vergabe (2, 3), die jede Lokalisierung mit einer Kurzadresse verknüpft,
• Zuweisen von zufälligen Langadressen in den Beleuchtungs-Komponenten,
• Aktivierung einer Beleuchtungs-Komponente über deren Langadresse **durch** die Einrichtung zur Kurzadress-Vergabe (2, 3),
• die über ihre Langadresse aktivierte Beleuchtungs-Komponente sendet ein Signal aus,
• ausgelöst **durch** dieses Signal sendet der Sender der aktivierten Beleuchtungskomponente eine Kennung,
• der Empfänger (4) erkennt anhand der Kennung, welcher Sender die Kennung gesendet hat, wertet die Kennung aus und meldet somit die resultierende Lokalisierung der aktivierten Beleuchtungs-Komponente an die Einrichtung zur Kurzadress-Vergabe,
• abhängig von der gemeldeten Lokalisierung vergibt die Einrichtung zur Kurzadress-Vergabe (2, 3) anhand der Zuweisungsliste an die aktivierte Beleuchtungs-Komponente eine Kurzadresse.

2. Verfahren gemäß Anspruch 1 **dadurch gekennzeichnet,**
**dass** eine Anzahl von Kurzadressen, die durch die Einrichtung zur Kurzadress-Vergabe (2, 3) vergeben werden sollen, festgelegt wird und
**dass** die folgenden Schritte so lange wiederholt werden, bis die festgelegte Anzahl von Kurzadressen vergeben ist:
• Aktivierung einer Beleuchtungs-Komponente über deren Langadresse durch die Einrichtung zur Kurzadress-Vergabe (2, 3),
• die über ihre Langadresse aktivierte Beleuchtungs-Komponente sendet ein Signal aus,
• ausgelöst durch dieses Signal sendet der Sender der aktivierten Beleuchtungs-Komponente eine Kennung,
• der Empfänger (4) erkennt anhand der Kennung, welcher Sender die Kennung gesendet hat, wertet die Kennung aus und meldet somit die Lokalisierung der aktivierten Beleuchtungs-Komponente an die Einrichtung zur Kurzadress-Vergabe (2, 3),
• abhängig von der gemeldeten Lokalisierung vergibt die Einrichtung zur Kurzadress-Vergabe (2, 3) anhand der Zuweisungsliste an die aktivierte Beleuchtungs-Komponente eine Kurzadresse.

3. System zur Vergabe von Kurzadressen für Beleuchtungs-Komponenten in Beleuchtungsanlagen, deren Beleuchtungs-Komponenten über einen DALI-Bus gesteuert werden und wobei jede Beleuchtungs-Komponente eine zufällige Langadresse besitzt,
**dadurch gekennzeichnet, dass**
das System eine Lokalisier-Einrichtung und eine Einrichtung zur Kurzadress-Vergabe (2, 3) aufweist,
wobei die Lokalisier-Einrichtung geeignet ist, die Lokalisierung einer aktivierten Beleuchtungs-Komponente an die Einrichtung zur Kurzadress-Vergabe zu melden,
wobei die Lokalisier-Einrichtung aus mehreren Sendern (TAG0, TAG1, ..., TAG63) und einem Empfänger (4) besteht, wobei jeder Sender ausgelegt ist an einer Beleuchtungs-Komponente zugeordnet zu werden,
wobei die Einrichtung zur Kurzadress-Vergabe (2, 3) eine gespeicherte Zuweisungstabelle aufweist, die jede Lokalisierung mit einer Kurzadresse verknüpft,
wobei die Einrichtung zur Kurzadress-Vergabe (2, 3) ausgelegt ist, die Beleuchtungs-Komponenten über deren Langadresse zu aktivieren wodurch die jeweilig aktivierte Beleuchtungs-Komponente ein Signal aussendet,
wobei der Sender der jeweilig aktivierten Beleuchtungs-Komponente ausgelegt ist, ausgelöst durch das ausgesendete Signal eine Kennung zu senden,
wobei der Empfänger (4) ausgelegt ist, anhand der Kennung zu erkennen, welcher Sender gesendet hat, die jeweilige Kennung auszuwerten und die resultierende Lokalisierung der jeweilig aktivierten Beleuchtungs-Komponente an die Einrichtung zur Kurzadress-Vergabe (2, 3) zu melden,
wobei die Einrichtung zur Kurzadress-Vergabe (3) weiterhin ausgelegt ist, abhängig von der gemeldeten Lokalisierung anhand der gespeicherten Zuweisungsliste der jeweiligen aktivierten Beleuchtungs-Komponente eine Kurzadresse zu vergeben.

4. System nach Anspruch 3, **dadurch gekennzeichnet, dass** die Einrichtung zur Kurzadress-Vergabe (2, 3) ein Interface (2) zur Verbindung mit dem DALI-Bus oder einem Gebäude-Steuerungs-Bus aufweist.

5. System gemäß Anspruch 3, **dadurch gekennzeichnet, dass**
wenigstens ein Sender der Lokalisierungs-Einrichtung ausgelegt ist, seine Kennung angeregt durch ein Lichtsignal zu senden.

6. System gemäß Anspruch 3, **dadurch gekennzeichnet, dass** wenigstens ein Sender der Lokalisierungs-Einrichtung ausgelegt ist, seine Kennung angeregt durch einen elektrischen Stromfluss zu senden.

7. System gemäß Anspruch 3, **dadurch gekennzeichnet, dass**
wenigstens ein Sender der Lokalisierungs-Einrichtung ausgelegt ist seine Energie aus einem elektromagnetischen Feld zu beziehen, das die Beleuchtungs-Komponente oder die Lokalisier-Einrichtung selbst erzeugt.

8. System gemäß Anspruch 3, **dadurch gekennzeichnet, dass**
wenigstens ein Sender der Lokalisierungs-Einrichtung ausgelegt ist in die Beleuchtungs-Komponente integriert zu werden.

9. System gemäß Anspruch 3, **dadurch gekennzeichnet, dass**
wenigstens ein Sender der Lokalisierungs-Einrichtung ausgelegt ist lösbar mit der Beleuchtungs-Komponente gekoppelt zu werden.

10. System gemäß Anspruch 3, **dadurch gekennzeichnet, dass**
die Einrichtung zur Kurzadress-Vergabe (2, 3) einen tragbaren Computer (3) umfasst.

## Claims

1. Method for the allocation of short addresses in illumination systems, whose illumination components are controlled via a DALI bus, **characterized by** the following steps:
• provision of a localization device, which is suitable for notifying a device for short-address allocation (2, 3) of the location of an activated illumination component, wherein the localization device consists of a plurality of transmitters (TAGO, TAG1, ..., TAG63) and a receiver (4), wherein a transmitter is assigned to each illumination component,
• storage of an allocation list in the device for short-address allocation (2, 3), which links each location with a short address,
• allocation of random long addresses in the illumination components,
• activation of an illumination component via its long address by the device for short-address allocation (2, 3),
• the illumination component activated via its long address outputs a signal,
• triggered by this signal, the transmitter of the activated illumination component transmits an identification,
• the receiver (4) detects, on the basis of the identification, which transmitter transmitted the identification, evaluates the identification and thus notifies the device for short-address allocation of the resulting location of the activated illumination component,
• depending on the notified location, the device for short-address allocation (2, 3) allocates a short address to the activated illumination component using the allocation list.

2. Method according to Claim 1, **characterized**
**in that** a number of short addresses, which are intended to be allocated by the device for short-address allocation (2, 3), is established, and
**in that** the following steps are repeated until the established number of short addresses has been allocated:
• activation of an illumination component via its long address by the device for short-address allocation (2, 3),
• the illumination component activated via its long address outputs a signal,
• triggered by this signal, the transmitter of the activated illumination component transmits an identification,
• the receiver (4) detects, on the basis of the identification, which transmitter transmitted the identification, evaluates the identification and thus notifies the device for short-address allocation (2, 3) of the location of the activated illumination component,
• depending on the notified location, the device for short-address allocation (2, 3) allocates a short address to the activated illumination component using the allocation list.

3. System for the allocation of short addresses for illumination components in illumination systems, whose illumination components are controlled via a DALI bus, and wherein each illumination component has a random long address,
**characterized in that**
the system has a localization device and a device for short-address allocation (2, 3),
wherein the localization device is suitable for notifying the device for short-address allocation of the location of an activated illumination component,
wherein the localization device consists of a plurality of transmitters (TAG0, TAG1, ..., TAG63) and a receiver (4), wherein each transmitter is configured so as to be assigned to an illumination component,
wherein the device for short-address allocation (2, 3) has a stored allocation table, which links each location with a short address,
wherein the device for short-address allocation (2, 3) is configured so as to activate the illumination components via their long addresses, as a result of which the respectively activated illumination component outputs a signal,
wherein the transmitter of the respectively activated illumination component is configured, triggered by the output signal, so as to transmit an identification,
wherein the receiver (4) is configured, on the basis of the identification, to detect which transmitter performed transmission, to evaluate the respective identification and to notify the device for short-address allocation (2, 3) of the resulting location of the respectively activated illumination component,
wherein the device for short-address allocation (3) is furthermore configured, depending on the notified location, so as to allocate a short address to the respectively activated illumination component using the stored allocation list.

4. System according to Claim 3, **characterized in that** the device for short-address allocation (2, 3) has an interface (2) for connection to the DALI bus or to a building control bus.

5. System according to Claim 3, **characterized in that**
at least one transmitter of the localization device is configured so as to transmit its identification induced by a light signal.

6. System according to Claim 3, **characterized in that** at least one transmitter of the localization device is configured so as to transmit its identification induced by a flow of electric power.

7. System according to Claim 3, **characterized in that**
at least one transmitter of the localization device is configured so as to draw its power from an electromagnetic field, which is produced by the illumination component or the localization device itself.

8. System according to Claim 3, **characterized in that**
at least one transmitter of the localization device is configured so as to be integrated into the illumination component.

9. System according to Claim 3, **characterized in that**
at least one transmitter of the localization device is configured so as to be coupled to the illumination component such that it can be released.

10. System according to Claim 3, **characterized in that** the device for short-address allocation (2, 3) comprises a portable computer (3).

## Revendications

1. Procédé pour allouer des adresses de format réduit dans des installations d'éclairage, dont les composants d'éclairage sont pilotés par le biais d'un bus DALI, **caractérisé par** les étapes suivantes :
- fourniture d'un dispositif localisateur qui est approprié pour signaler la localisation d'un composant d'éclairage activé à un dispositif d'allocation d'adresses de format réduit (2, 3), dans lequel le dispositif localisateur est composé de plusieurs émetteurs (TAG0, TAG1, ..., TAG63) et d'un récepteur (4), dans lequel un émetteur est attribué à chaque composant d'éclairage,
- mise en mémoire d'une liste d'attributions dans le dispositif d'allocation d'adresses de format réduit (2, 3) qui relie chaque localisation à une adresse de format réduit,
- attribution d'adresses de format long aléatoires dans les composants d'éclairage,
- activation d'un composant d'éclairage par son adresse de format long par le dispositif d'allocation d'adresses de format réduit (2, 3),
- le composant d'éclairage activé par son adresse de format long envoie un signal,
- déclenché par ce signal, l'émetteur envoie un identificateur au composant d'éclairage activé,
- le récepteur (4) détecte à l'aide de l'identificateur, quel émetteur a envoyé l'identificateur, évalue l'identificateur et signale ainsi la localisation résultante du composant d'éclairage activé au dispositif d'allocation d'adresses de format réduit,
- en fonction de la localisation signalée, le dispositif d'allocation d'adresses de format réduit (2, 3) alloue une adresse de format réduit au composant d'éclairage activé à l'aide de la liste d'attributions.

2. Procédé selon la revendication 1, **caractérisé en ce qu'**un nombre d'adresses de format réduit qui doivent être allouées par le dispositif d'allocation d'adresses de format réduit (2, 3) est déterminé et que les étapes suivantes doivent être répétées jusqu'à ce que le nombre d'adresses de format réduit déterminé soit alloué :
- activation d'un composant d'éclairage par son adresse de format long par le dispositif d'allocation d'adresses de format réduit (2, 3),
- le composant d'éclairage activé par son adresse de format long envoie un signal,
- déclenché par ce signal, l'émetteur envoie un identificateur au composant d'éclairage activé,
- le récepteur (4) détecte à l'aide de l'identificateur, quel émetteur a envoyé l'identificateur, évalue l'identificateur et signale ainsi la localisation du composant d'éclairage activé au dispositif d'allocation d'adresses de format réduit (2, 3),
- en fonction de la localisation signalée, le dispositif d'allocation d'adresses de format réduit (2, 3) alloue une adresse de format réduit au composant d'éclairage activé à l'aide de la liste d'attributions.

3. Système pour allouer des adresses de format réduit dans des installations d'éclairage, dont les composants d'éclairage sont pilotés par le biais d'un bus DALI et dans lequel chaque composant d'éclairage possède une adresse de format long aléatoire, **caractérisé en ce que**
le système présente un dispositif localisateur et un dispositif d'allocation d'adresses de format réduit (2, 3),
dans lequel le dispositif de localisateur est approprié pour signaler la localisation d'un composant d'éclairage activé au dispositif d'allocation d'adresses de format réduit,
dans lequel le dispositif localisateur est composé de plusieurs émetteurs (TAG0, TAG1, ..., TAG63) et d'un récepteur (4), dans lequel chaque émetteur est conçu pour être attribué à un composant d'éclairage,
dans lequel le dispositif d'allocation d'adresses de format réduit (2, 3) présente un tableau d'attribution enregistré en mémoire qui relie chaque localisateur à une adresse de format réduit,
dans lequel le dispositif d'allocation d'adresses de format réduit (2, 3) est conçu pour activer les composants d'éclairage par leur adresse de format long, ce par quoi le composant d'éclairage activé respectif envoie un signal,
dans lequel l'émetteur du composant d'éclairage activé respectif est conçu pour, déclenché par le signal envoyé, envoyer un identificateur,
dans lequel le récepteur (4) est conçu pour détecter à l'aide de l'identificateur, quel émetteur a envoyé, évaluer l'identificateur respectif et signaler la localisation résultante du composant d'éclairage activé respectif au dispositif d'allocation d'adresses de format réduit (2, 3),
dans lequel le dispositif d'allocation d'adresses de format réduit (3) est en outre conçu pour, en fonction de la localisation signalée, allouer une adresse de format réduit au composant d'éclairage activé respectif à l'aide de la liste d'attributions enregistrée en mémoire.

4. Système selon la revendication 3, **caractérisé en ce que** le dispositif d'allocation d'adresses de format réduit (2, 3) présente une interface (2) pour la liaison avec le bus DALI ou un bus de pilotage de bâtiment.

5. Système selon la revendication 3, **caractérisé en ce qu'**au moins un émetteur du dispositif de localisation est conçu pour envoyer son identificateur, excité par un signal lumineux.

6. Système selon la revendication 3, **caractérisé en ce qu'**au moins un émetteur du dispositif de localisation est conçu pour envoyer son identificateur, excité par un courant électrique.

7. Système selon la revendication 3, **caractérisé en ce qu'**au moins un émetteur du dispositif de localisation est conçu pour recevoir son énergie à partir d'un champ électromagnétique que le composant d'éclairage ou le dispositif de localisateur produit lui-même.

8. Système selon la revendication 3, **caractérisé en ce qu'**au moins un émetteur du dispositif de localisation est conçu pour être intégré dans le composant d'éclairage.

9. Système selon la revendication 3, **caractérisé en ce qu'**au moins un émetteur du dispositif de localisation est conçu pour être couplé de manière séparable au composant d'éclairage.

10. Système selon la revendication 3, **caractérisé en ce que** le dispositif d'allocation d'adresses de format réduit (2, 3) comprend un ordinateur portable (3).
